# EUROPEAN PATENT APPLICATION

(11) **EP 4 012 584 A1**
(43) Date of publication of application: **15.06.2022**
(21) Application number: 21181510.5
(22) Date of filing: 24.06.2021
(51) Int. Cl.: G06F 21/12, G06F 21/62, G06F 9/44, G06F 9/445

(54) **METHOD FOR CREATING EXTENDED ELF FILES TO PROVIDE UNIFIED AND SECURE DEPLOYMENTS**

(30) Priority: 11.12.2020 EP 20213563
(71) Applicant: Commsolid GmbH, 01099 Dresden (DE)
(72) Inventor: Höher, Martin, 01127 Dresden (DE)
(74) Representative: Lippert Stachow Patentanwälte Rechtsanwälte Partnerschaft mbB

(57) **Abstract**

The invention relates to a method for creating an extended ELF file, which contains a compiled application code and additional embedded resources to provide unified and secure deployments in software engineering. The objective of the present invention to modify and create extended ELF files to provide unified and secure deployments in software engineering will be solved by a method comprising the following steps:
- modifying an ordinary ELF file, which consists of arbitrary many sections, by adding a first additional non-loadable section, whereas said first additional non-loadable section contains control information for tools that will use the extended ELF file,
- further adding at least one further non-loadable section to the sections of the ordinary ELF file and name the at least one further non-loadable section with an arbitrary string,
- storing an additional resource, that needs to be embedded, in the at least one further non-loadable section,
whereas the first additional non-loadable section is used as a manifest to get the string of the further non-loadable section and to read the content of the additional embedded resource.

## Description

### Method for creating extended ELF files to provide unified and secure deployments

The invention discloses a method for creating an extended ELF file, which contains a compiled application code and additional embedded resources to provide unified and secure deployments in software engineering.

In computing, the Executable and Linkable Format (ELF), is a common standard file format for executable files, object code, shared libraries, and core dumps. It was quickly accepted among different vendors of Unix systems. In 1999, it was chosen as the standard binary file format for Unix and Unix-like systems on x86 processors by the 86open project.

By design, the ELF format is flexible, extensible, and cross-platform. For instance, it supports different endiannesses and address sizes so it does not exclude any particular central processing unit (CPU) or instruction set architecture. This has allowed it to be adopted by many different operating systems on many different hardware platforms.

Each ELF file is made up of one ELF header, followed by file data. The data can include program header table, describing zero or more memory segments, section header table, describing zero or more sections and data referred to by entries in the program header table or section header table.

The segments contain information that is needed for run time execution of the file, while sections contain important data for linking and relocation. Any byte in the entire file can be owned by one section at most, and orphan bytes can occur which are unowned by any section.

Building an application using languages like C or C++ requires compiling and linking them, which usually results in a single, binary file being created. The Executable and Linkable Format (ELF), mentioned above, is often used for this purpose, e. g. by Linux for Desktops, but also in the embedded domain. The ELF format is designed to contain the compiled machine code as well as debug information, which is required when running the application in a debugger.

Often, it is also desired to be able to ship additional data with the application, especially if this data has an implicit dependency on the concrete version of the application being built.

For example, the application might produce a binary log file, which holds information about the concrete tasks it executes one after the other. Hence, a kind of log message decoder is necessary, that needs to be shipped together with the executable file. Another example could be in the embedded domain, where e. g. connection parameters to peripherals such as a data UART (universal asynchronous receiver-transmitter) are required.

Currently, a common approach to solve such "complex" deployment scenarios is to package everything (i. e. the executable file as well as all additional resources) in an archive, e. g. a zip-file or an installer which an end user later on runs to install the application and all accompanying assets. However, this approach is not suitable for "internal" workflows: If developer A builds e. g. a firmware for an embedded device and user B is supposed to test it, having the actual executable ELF file wrapped into another asset means that user B needs to extract it first, either by inflating a zip-file or installing the deployment. Only then he is able to e. g. load the executable onto a device and start debugging it, because the usually standard tools are not able to deal with the archive directly.

Alternative implementations in the prior art involve having installers or archive files, where, besides the executable file, all other resources are included as well. A disadvantage compared to the described approach is, that especially for company-internal workflows it is cumbersome to always go through the complete build -> package -> copy - > unpack/install -> run flow. A lot of standard tools, like debuggers, need standard file formats like ELF files to work with, so ideally this is what the invention wants to deploy.

Another approach to solve such complex deployments is to set up an artifact server, where all files - executables and resources files - are stored. If a user needs e. g. a log file decoder for a particular application, tools like the log file analyzer could query the artifact server for a log file decoder matching the local executable file. However, this kind of deployment only works if access to said server is available all the time. If this is not the case, e. g. when running tools inside a special, protected area with limited network access, it fails.

Finally, it is also desired to be able to control access to the resources delivered together with an application. Referring back to the log file decoder problem: While end users might require access to the compiled machine code of the application so they can run it, it might be desired to do not provide them access to the log file decoder, because the human-readable log might expose too many internal details about the application logic.

So, the problem that needs to be solved is to create a single-file deployment containing compiled application code along with additional resources. Furthermore, said file shall be compatible with an ordinary ELF file such that existing tools like debuggers can work with them without modification and last but not least an access to delivered resources shall be controllable.

It is therefore an objective of the present invention to modify and create extended ELF files to provide unified and secure deployments in software engineering.

The objective of the present invention will be solved by a method according to independent claim 1.

The method for creating an extended ELF file, which contains a compiled application code and additional embedded resources to provide unified and secure deployments in software engineering comprises the following steps:
- modifying an ordinary ELF file, which consists of arbitrary many sections, by adding a first additional non-loadable section, whereas said first additional non-loadable section contains control information for tools that will use the extended ELF file,
- further adding at least one further non-loadable section to the sections of the ordinary ELF file and name the at least one further non-loadable section with an arbitrary string,
- storing an additional resource, that needs to be embedded, in the at least one further non-loadable section,
whereas the first additional non-loadable section is used as a manifest to get the string of the further non-loadable section and to read the content of the additional embedded resource.

A non-loadable section in the sense of this invention will be any "custom" section that is embedded into the ordinary ELF file. In general, ELF uses flags to mark sections as either loadable or not (non-loadable section). Non-Loadable sections, as are used in the inventive method, are typically used for debug symbols. The "first" custom section, the named "first additional non-loadable section" that is embedded by the inventive method (at least internally) named "manifest" or "manifest section" which is a well understood name in software engineering. The "further non-loadable section" is another non-loadable section that is added to the ordinary ELF file and in which additional resources are stored.

So, the ordinary ELF file format is reused directly, because only then the deliveries can be directly processed by existing standard tools. ELF files are binary files, consisting of arbitrary many sections. A section has a name as well as associated address information and usually the compiled machine code. An ordinary ELF file format is understood as a "living" standard in that it is continuously adapted to current development needs. A generic specification is available e. g. on LinuxBase: https://refspecs.linuxbase.org/elf/elf.pdf. The basic idea is now that for each resource or file or additional information that should be embedded into the ordinary ELF file, further non-loadable sections are added, that contain the desired data of an additional embedded resource which, however, is not loaded when running the executable file.

So, the resulting files are still ordinary ELF files and can be used directly by tools like debuggers, which require such a format for loading and debugging an application. Especially for company internal workflows, where it is critical to be able to pass around builds of applications quickly, this is crucial, as no intermediate "installation" or "extraction" steps need to be carried out manually by the users.

The modified ELF files can contain any kind of additional resources that users might require in order to work with that particular build of the application, be it configurations, log file decoders or anything else an accompanying tool might require when working with a particular build of the application to be delivered.

As mentioned above, in ordinary ELF files sections must explicitly be marked as loadable to be loaded or non-loaded to be non-loaded, which means its content will be loaded or will not be loaded when running / loading the ELF file. The content of non-loadable sections will be used, e. g. for debug information. Hence, the idea of the inventive method is to use a first non-loadable section, additionally to already existing non-loadable sections which are already in the ordinary ELF file. Its content is a "manifest" or register or list, i. e. it contains additional control information for tools that later on will use the modified ELF file to extract the embedded resources.

In a variant of the inventive method, the first additional non-loadable section of the extended ELF file is named always with the same name.

Using a fixed name for this first additional non-loadable section has the advantage, that tools have a reliable starting point to extract information from the ELF file.

In another variant of the inventive method, the arbitrary string of the at least one further non-loadable section is either a name of the additional embedded resource or a generated identifier. A generated identifier can be for example a universally unique identifier (UUID). The content of said further non-loadable section is then the actual content that needs to be embedded.

The first additional non-loadable section as a kind of manifest or register contains mappings of file names or paths to the further non-loadable section names, especially if using some generated names for the sections to keep the likelihood of name clashes at a minimum. This way, if a tool requires e. g. the embedded resource "res/log-decoder.xml", it will firstly read the first additional non-loadable section from the ELF file, then get the section name from said first additional non-loadable section and finally read the section content, which is the content of the desired file.

In a further variant of the inventive method, each additional embedded resource is protected by the following steps:
- generating an AES key;
- protecting the additional embedded resource that should be protected with said generated AES key;
- creating an asymmetric key pair comprising a public and a private key;
- encrypting said generated AES key with a public key of the asymmetric key pair;
- storing the encrypted AES key in a further non-loadable section of the modified ELF file or directly in the first additional non-loadable section of the modified ELF file.

To protect access to the embedded resources, the first additional non-loadable section together with a combination of symmetric encryption can be used. For each resource that shall be protected, a generated key for encryption, e. g. an Advanced Encryption Standard (AES) key, is used, whereas the generated AES key is encrypted with a public key of a created asymmetric key pair and said encrypted AES key is stored in a further non-loadable section or directly in the first additional non-loadable section of the modified ELF file.

To read back the protected section the following steps have to be performed:
- A user needs access to the private key of the created key pair;
- The encrypted AES key is read from the manifest, hence the first additional non-loadable section; the AES key is decrypted;
- With the decrypted AES key, the actual section content can be decrypted.

The protection of additional embedded resources is important for two reasons: Firstly, it enables granting access to different user groups (as stated below) and secondly, RSA encryption/decryption is a slow operation, whereas AES is fast. So it makes sense, to use AES for the "large" files and only encrypt critical parts using e. g. RSA.

So, in a further other variant of the inventive method, for each group of end users that shall have access to the additional embedded resource, an asymmetric key pair is created, one private key and one public key of the group of end users. Support for multiple user groups is implemented on top of the above described encryption scheme, but the general idea remains the same. Each "user group" gets its own asymmetric key pair generated. For every group of users that shall get access to the data, the AES key is encrypted with that group's public key and saved/stored to the modified ELF file. Hence, to be able to read a protected and additional embedded resource, a user must possess at least one of the private keys where the counter public key was used to encrypt and store one cipher version of the AES key. To sum it up: Only the encrypted version of the AES key is ever stored in the ELF file.

So, if required, critical resources can be encrypted and, by means of distributing a software key, are only accessible by a defined audience. That way, the resulting binary can be passed on even to users who shall not be able to read all of the embedded information.

The symmetric key previously created is encrypted once with each public key of the user group that shall later have access to the embedded resource and then added to the first additional non-loadable section. For example, if a resource shall be shared with two groups of users, e. g. the "internal" users of a company and "external" users of a customer of that company, the symmetric key is encrypted once with each group's public key and then, the symmetric key is stored twice in the first additional non-loadable section. In order to grant access to the resource embedded, the private keys, which act as a kind of software license, is distributed to the appropriate user group. For example, in the case of the log file analyzer, the private key could be delivered as part of the tool installation, so it is able to extract and decrypt the embedded information.

In a variant of the inventive method, a protocol is used to write the resource to the ELF file and to extract the information of the resource on a consumer side.

A protocol is defined on top which tools can implement to embed arbitrary resources into ELF files in a, if desired, protected way and, on the consuming side, extract the information again. The usage of a well-designed protocol has the advantage of that tools and libraries can easily be written to access the embedded information. The protocol would basically describe the embedded information and allow e. g. listing the embedded files via additional tooling. A very simple yet sufficient approach is to use a widely used format like JSON or YAML for the content of the manifest section. Tools and libraries that would need to access the embedded information always first read this file. Hence, using a standard format keeps implementation effort low. The content of the manifest file is then used to further extract necessary information and the actual data of the embedded resources. Typically, the manifest will contain an "object" (in JSON jargon), i. e. a key/value map (where values in turn can also contain objects or lists, hence, the manifest itself can be arbitrary complex). The manifest typically needs to provide the following information:
- The list of embedded resources, i. e. a mapping of a resource name to the ELF section name which contains the actual data of that resource).
- If encryption is used, the (encrypted) AES keys and potentially other relevant data (like initialization vectors) or information in which section of the ELF file the appropriate information is stored (if an implementation opts to not store this information directly in the manifest).

In addition, the manifest can be used to store additional meta information, e. g. a project name and version, which then could be used by the tools reading resources from the ELF file. For example, depending on a version number, tools might prefer to use newer types of resources compared to older releases. For example, if configuration files or scripts are embedded, a single ELF file might contain both the "old" variants of these files, for backwards compatibility, as well as the "new" ones which might e. g. be more efficient, provide extra information, and so on. A tool might then check the meta data first to learn which files it might expect to find in the ELF file.

The described inventive method can be used in a wide field of areas in theory, however, especially in the "desktop" area it is quite common to work with archives or installers to deploy a compiled application.

The approach is therefore rather interesting for:
Company-internal workflows, where it is faster to just copy a single file around and be able to use it for a wide variety of use cases without going through a dedicated "installation" step.

For deliveries of e. g. embedded applications to end users. It is not uncommon that an end user received an ELF file containing the compiled machine code. It is also normal for such an end user to record e. g. logs or crash dumps of the application during testing. With the described approach, decoders required to understand such recorded files could be put straight into the ELF file. When a user reports an issue, they would include both the recorded files as well as the ELF file they used for conducting the test. This information would then be enough to analyze the issue internally, as it is guaranteed that the resources required for analysis and the recorded files match in their version.

So, the described inventive method combines the ease of use of simple ELF files with the advantages of a proper installer and allows to protect the included information at the same time.

If required, critical resources can be encrypted and, by means of distributing a software key, are only accessible by a defined audience. That way, the resulting binary can be passed on even to users who shall not be able to read all of the embedded information.

The inventive method will be described in more detail using exemplary embodiments.

The appended drawings show
- Fig. 1: Workflow for embedding of resources in an ELF file according to the invention;
- Fig. 2: Workflow for using resources embedded in modified ELF files;
- Fig. 3: General overview for extending ELF files to create unified and secure deployments.

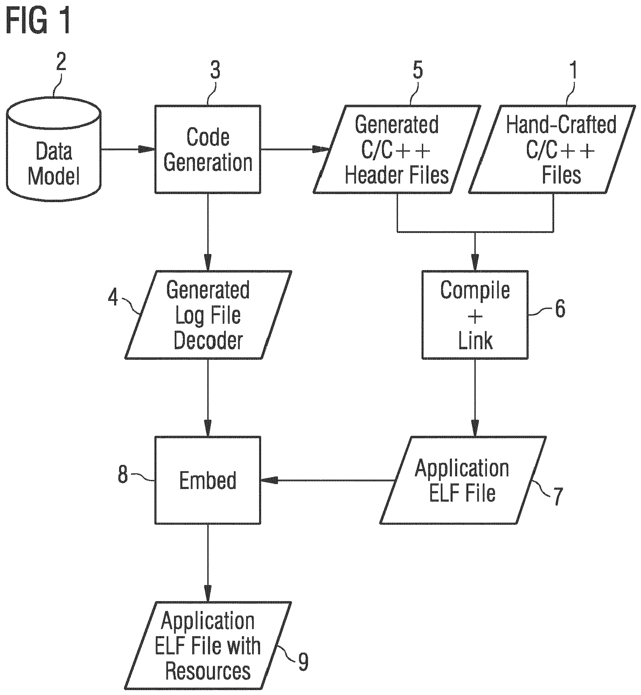

The diagram according to figure 1 illustrates how the process of creating a modified ELF file with embedded resources works. Assuming a project which consists of both hand-crafted C/C++ source code 1 as well as a data model 2. This is a typical case in more complex applications, where it is beneficial to have a part of information, usually "interface" type definitions and constants, available in such a way, that it can be used in various domains. For example, in the embedded domain, using C/C++ is the de facto standard, however, a test framework which runs system tests on the overall system, i. e. the hardware + embedded software, might be written in another high level language, e. g. Python or Java. If the interface of the application is defined in a data model 2, an appropriate code 3 not only for the application itself can be generated, but also for this test framework. Furthermore, assuming that the application in question later on produces a log file which could be used to analyze runtime issues. To read this log file, some kind of decoder 4 is required. This could be e. g. an XML file describing the format of the individual log messages or also "code", e. g. Python or JavaScript code, which later on could be run by the actual log file analyzer software to decode the log entries and show them to the user. Because both, the generated C/C++ files 5 and 1 for the application and the log file decoder 4, are created from the data model 2, they have a kind of implicit dependency on it, and also on each other. The generated C/C++ files 5 and 1 are compiled and linked 6 and an ordinary application ELF file 7 is generated. When running a specific version of the application, it is important to use a matching log file decoder 4, because otherwise the decoded message content might not be reliable. To solve this problem, after compiling and linking 6 the sources of the actual application, another step is added, namely the embed step 8, where the generated log file decoder 4 is stored right into the ELF file. Now it is sufficient to pass around this extended and modified ELF file 9, because it holds everything required for both executing the application as well as analyzing logs that it created during runtime.

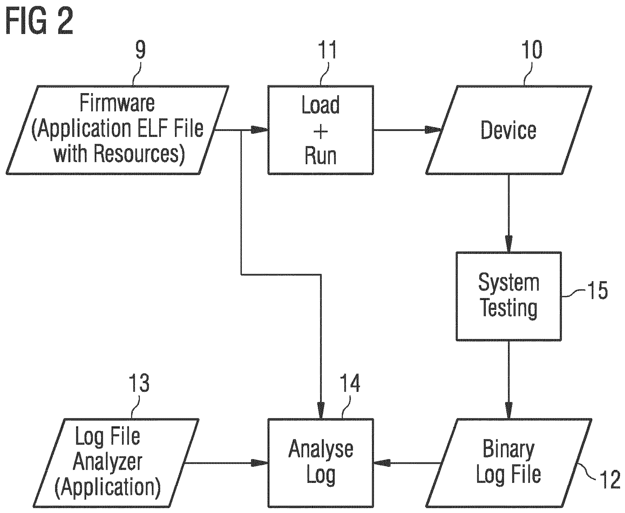

Figure 2 shows another embodiment of the inventive method. It illustrates how to use the resources embedded in an ELF file 9. The modified ELF file 9 contains additional resources, e. g. the decoder for binary log files as mentioned above. The ELF file contains the machine code for an embedded application, which is loaded onto a device 10. Now, some testing is conducted with the device 10, e. g. to verify the functionality of the just loaded 11 firmware version. This results, among other things, in the creation of a log file 12. This log file 12 is in binary form, for example it contains raw data of data structures used within the firmware, which are not further processed before writing to the log for the sake of efficiency. However, that means that a decoder 9, which is a piece of data or a script which was previously embedded in the modified ELF file, is needed to convert the binary log content to a human readable format. For that purpose, a log file analyzer 13 application is needed. This application directly uses the same ELF file 9 as was previously loaded 11 onto the device 10 as "decoder". It can extract the actual decoder from the ELF file 9, as a well-defined protocol was implemented and used to write the resources to the ELF files. Because the same ELF file as loaded 11 onto the device 10 is used, one can be sure that either the contained decoder 4 in the modified/extended ELF file properly translates 14 the binary content 12 to a human readable form or the application itself does the decoding depending on the concrete approach.

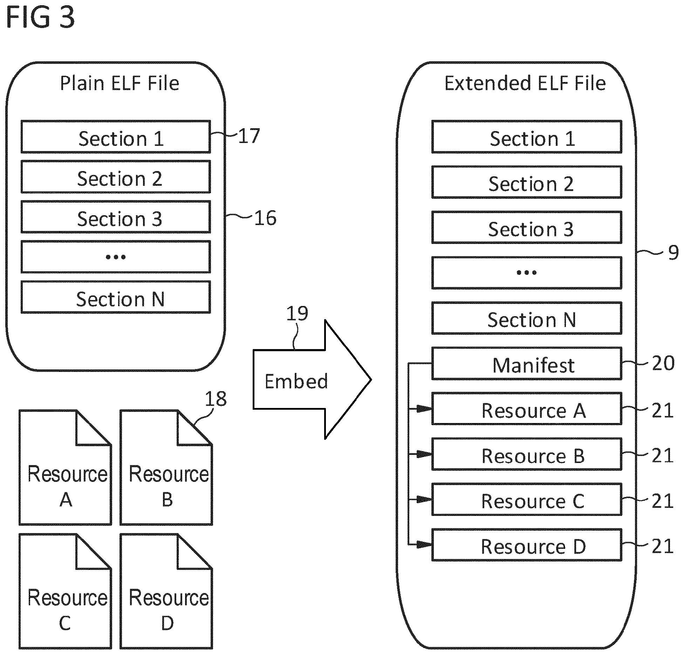

Figure 3 shows the overall set up in terms of the involved files. Starting point is a plain ELF file 16, which is produced by calling a toolchains compiler and linker on the source files. This ELF files consists of some meta data and various sections 17, which contain the compiled machine code as well as debugging symbols (if the application has been built with debug symbols enabled). The overall goal is to embed additional resources 18, that typically are stored as individual files as well. Hence, via the embed procedure 19, an extended ELF file 9 is produced. This ELF file 9 contains the original sections from the plain ELF file 16. In addition, the resources have been added as new, non-loadable sections 21, whereas this is required in order that tools will not try to interpret these sections 21 as code that needs to be loaded. In addition, another additional section 20 is added, which contains all the information that tools need to extract the resources 18 from the extended ELF file 9, this section is called the manifest section 20. This section 20 serves as the starting point for the extraction of a particular resource. A tool would first read the manifest 20. From the manifest 20 or first additional non-loadable section, it can learn which concrete resources are stored in the extended ELF file 9 and read them out as well, applying - if used - e. g. decryption of the previously encrypted data.

### List of Reference Signs

1 hand-crafted C/C++ files
2 data model
3 code generation
4 generated log file decoder
5 generated C/C++ header files
6 compiling and linking step
7 ordinary application ELF file
8 storing/embedding the additional resource
9 extended and modified ELF file
10 device on which the application is running
11 load and run step of the modified ELF file
12 binary log file
13 log file analyzer
14 analyze log
15 system testing step
16 plain ELF file
17 section within an ELF file
18 additional resources to be embedded
19 embed procedure
20 manifest section, first additional non-loadable section
21 additional data sections, further non-loadable section

## Claims

1. A method for creating an extended ELF file (9), which contains a compiled application code and additional embedded resources (18) to provide unified and secure deployments in software engineering, the method comprising the following steps:
- modifying an ordinary ELF file (16), which consists of arbitrary many sections (17), by adding a first additional non-loadable section (20), whereas said first additional non-loadable section (20) contains control information for tools that will use the extended ELF file (9),
- further adding at least one further non-loadable section (21) to the sections (17) of the ordinary ELF file (16) and name the at least one further non-loadable section (21) with an arbitrary string,
- storing an additional resource (18), that needs to be embedded, in the at least one further non-loadable section (21),
whereas the first additional non-loadable section (20) is used as a manifest to get the string of the further non-loadable section (21) and to read the content of the additional embedded resource (18).

2. The method for creating an extended ELF file (9) according to claim 1, wherein the first additional non-loadable section (20) of the extended ELF file (9) is named always with the same name.

3. The method for creating an extended ELF file (9) according to claim 1, wherein the arbitrary string of the at least one further non-loadable section (21) is either a name of the additional embedded resource (18) or a generated identifier.

4. The method for creating an extended ELF file (9) according to claim 1, wherein each additional embedded resource (18) is protected by the following steps:
- generating an AES key;
- protecting the additional embedded resource (18) that should be protected with said generated AES key;
- creating an asymmetric key pair comprising a public and a private key;
- encrypting said generated AES key with a public key of the asymmetric key pair;
- storing the encrypted AES key in a further non-loadable section of the modified ELF file or directly in the first additional non-loadable section (20) of the modified ELF file (9).

5. The method for creating an extended ELF file (9) according to claim 1, wherein for each group of end users that shall have access to the additional embedded resource (18), an asymmetric key pair is created, one private key and one public key of the group of end users.

6. The method for creating an extended ELF file (9) according to claim 1, wherein a protocol is used to write the resource to the ELF file and to extract the information of the resource on a consumer side.
